# EUROPEAN PATENT APPLICATION

(11) **EP 3 232 581 A1**
(43) Date of publication of application: **18.10.2017**
(21) Application number: 15867110.7
(22) Date of filing: 10.12.2015
(51) Int. Cl.: H04B 5/00

(54) **SYSTEM, AND SYSTEM DESIGN METHOD, USED FOR DATA TRANSMISSION BETWEEN OBJECTS ROTATING RELATIVE TO EACH OTHER**

(30) Priority: 12.12.2014 CN 201410771450
(71) Applicant: Beijing Hangxing Machinery Manufacturing Co., Ltd., Beijing 100013 (CN)
(72) Inventor: XU, Yuanfei, Beijing100013 (CN); YAO, Wei, Beijing 100013 (CN); GUO, Wenbin, Beijing 100013 (CN); LIU, Yuping, Beijing 100013 (CN)
(74) Representative: Handsome I.P. Ltd
(86) International application number: PCT/CN2015/097071
(87) International publication number: WO 2016/091202

(57) **Abstract**

A data transmission system used between counter rotating bodies and the design method of the system consisting of a data acquisition unit, one-to-N1 branching unit, N1 launching units, N2 all-in-one combiner, N2 receiving units and data processing equipment. N1 launching units and one-to-N1 branching unit are set on one counter rotating body; N2 all-in-one combiner and N2 receiving units are set on the other counter rotating body; one of the launching units and one of the receiving units are arranged on the closed movement path of the rotating body, and the maximum interval between two adjacent units of the other one is the closed movement path divided by its number and then deducted by the working range of the former one. One pair or several pairs of N1 launching units and N2 receiving units, of which the working range coincides with each other, have data transmission.

## Description

### Technical Field

The invention relates to a data transmission device used between counter rotating bodies and design method of the device, particularly to the non-contact data transmission device used to test data in CT equipment and radar and design method of the device.

### Background

In the field of non-contact data transmission, one demand for application is to transmit data between counter rotating bodies, namely, the data launching units and the data receiving units are set on the counter rotating bodies respectively, and the counter rotating bodies are hollow in the middle, or the middle of the counter rotating bodies is occupied by other devices, so no data transmission device can be placed, such as the data slip ring in computed tomography (CT) system; wherein, the test data are in rotating state, and data need to be sent to the fixed image processing terminal through noncontact way.

At present, two technologies can meet such need; one is radio coupling technology, and the other one is light transmission technology. Wherein, the United States Patent US7079619 and German Patent DE4412958A1 disclose the radio coupling technology, and China Patent CN1997315A and China Patent CN100534013C disclose the light transmission technology.

The radio coupling technology disclosed in patent US7079619 and patent DE4412958A1 adopts the antenna to launch and receive electromagnetic radiation signals. In order to get a higher data transmission rate, the antenna needs to be shortened, but in such way, the signal can easily be disturbed by other electromagnetic signals, thereby reducing the transmission quality. Besides, the electromagnetic radiation launched during signal transmission may also affect other electronic devices and cause interference to them.

Patent CN1997315A discloses a data transmission method based on the alternation of several launching units and several receiving units, but data transmission may be interrupted for a while when the receiving units are switched, which needs to be counterbalanced by adding additional cache and compression equipment. The receiving units also need an alignment adjustment device, which makes it complex and increases the cost. Besides, during the data transmission between the aligned launching units and receiving units, spacing between the launching units and receiving units is continuously changed, as a result of which, the data transmission path is also changed continuously, thereby affecting the data transmission performance.

Patent CN100534013C discloses an optical data transmission method based on optical waveguide, but the optical waveguide adopted is of a complete circle, of which the cost is high. Besides, when the receiving unit is rotating, its spacing from the launching unit is also changing. Such change may also cause the continuous change of the data transmission path, thereby affecting the data transmission performance.

### SUMMARY

The goal of the invention is to introduce a data transmission device used between counter rotating bodies, particularly to a data transmission device used between hollow counter rotating bodies or the counter rotating bodies of which the middle is occupied, and introduce the design method of the data transmission device. The device can be used between a fixed body and a rotating body, and can also be used between the rotating bodies with a speed difference. Compared with the existing transmission device or method used between counter rotating bodies, such device has the strengths of lost cost and high transmission rate.

Data transmission between counter rotating bodies is actually the data transmission between the launching units and receiving units with counter rotation. Among the launching unit and receiving unit having counter rotation, one device can be taken as in a relatively still state, and the other device is rotating against the still one.

The data transmission system used between counter rotating bodies in the invention adopts the data transmission method based on the alternation between several launching units and several receiving units; the system consists of a data acquisition unit, one-to-N1 branching unit, N launching units, N2 all-in-one combiner, N2 receiving units, and data processing equipment. N1 launching unit and one-to-N1 branching unit are set on one counter rotating body; N2 all-in-one combiner and N2 receiving units are set on the other counter rotating body; The number of the N1 and N2 is determined according to the effective launching range as the working range of the launching unit and the effective receiving range as the working range of the receiving unit. One of the launching units and one of the receiving units are evenly arranged on the closed movement path of the rotating body, and the maximum interval between two adjacent units of the other one is the closed movement path divided by its number and then deducted by the working range of the former one. When the data transmission system between the objects of counter rotation works, the data acquired by the data acquisition unit are sent to N1 launching units by one-to-N1 branching unit. One pair or several pairs of the N1 launching units and N2 receiving units, of which the working range coincides with each other, have data transmission between them. The receiving unit that receives data sends the data to the data processing equipment through the N2 all-in-one combiner.

All the paths of motion of the counter rotating body are closed circle. When the effective launching range of the launching unit is α, and the effective receiving range of the receiving unit is β, the product of the number of the launching units and the receiving units N1 and N2 is greater than or equal to the least integer of 360°/(α +β); both N1 and N2 are positive integer. The respective interval of the launching unit and the receiving unit is: If the receiving units are evenly distributed on the closed circle of path, the radian of the central angle of the adjacent intervals is 360°/ N2; the radian of central angle of the maximum interval between the adjacent launching units is 360°/ N1-β.

Preferentially, when the effective launching range is smaller than one-tenth of the effective receiving range, set α as 0; when the effective receiving range is smaller than one-tenth of the effective launching range, set β as 0.

Preferentially, the one-to-N1 branching unit can choose the optical branching device or circuit branching device according to the transmission carrier of the data sent by the data acquisition unit to the launching unit; the N2 all-in-one combiner can also choose the optical combiner or circuit combiner according to the form of data transmission carrier.

The design method of a data transmission system used between counter rotating bodies in the invention is the design method of the data transmission system used between the counter rotating bodies of any one of claims 1∼4; the design method consists of: Step 1. Determine the rotation diameter of the counter rotating bodies; Step 2. Calculate the central angle α of the circular segment covered by the effective launching range of the launching unit on the corresponding rotation circle within the rotation diameter, and calculate the central angle β of the circular segment covered by the effective receiving range on the corresponding rotation circle within the rotation diameter according to the effective launching range of the launching unit and the effective receiving range of the receiving unit; Step 3. Work out the product of the number of the receiving units and the launching units N≥360°/(α+β); N is positive integer; Step 4. Determine the number of the receiving unit and the launching unit according to the product N, and the number of the receiving unit and launching unit is a positive integer. Step 5. Confirm the launching units or the receiving units are arranged evenly along the rotation circle. Then the central angle of the maximum interval between the two adjacent units of the other assembly on the rotation circle is 360° divided by the number of units and then deducted by the effective working range of the former assembly; and Step 6. The receiving units and the launching units shall be arranged according to the above data and connected with other parts of the system.

Preferentially, set α or β as 0.

Preferentially, when the launching range is smaller than one-tenth of the receiving range, set α as 0; or when the receiving range is smaller than one-tenth of the launching range, set β as 0.

Preferentially, suppose the number of the receiving unit or the number of the launching unit is 1, then the unit can be arbitrarily set, and the other units shall be evenly set on the rotation circle.

Preferentially, decide the number of the receiving units and the launching units, so that the receiving units and the launching units can be evenly set on their respective rotation circle.

The data transmission device and method of the invention can effectively reduce the cost of the launching unit and receiving unit and improve the transmission rate. Besides, the system can realize real-time transmission of data and needs no additional data storage device.

### BRIEF DESCRIPTION OF THE DRAWINGS

FIG. 1 is a schematic diagram of the initial state of the launching units and the receiving range of the receiving units before rotation of the counter rotating bodies in the embodiment of the invention.
FIG. 2 is a schematic diagram of the state of the launching unit and the receiving range of the receiving unit after the counter rotating bodies in the embodiment have rotated for a certain angle anticlockwise.
FIG.3 is a schematic diagram of the state of the launching unit and the receiving range of the receiving unit after the counter rotating bodies in the embodiment continue rotating anticlockwise on the basis of FIG. 2.
FIG. 4 is a schematic diagram of the state of the launching unit and the receiving range of the receiving unit after the counter rotating bodies in the embodiment continue rotating anticlockwise on the basis of FIG. 3.
FIG. 5 is a schematic diagram of the state of the launching unit and the receiving range of the receiving unit after the counter rotating bodies in the embodiment continue rotating anticlockwise on the basis of FIG. 4.
FIG. 6 is a schematic diagram of the state of the launching unit and the receiving range of the receiving unit after the counter rotating bodies in the embodiment continue rotating anticlockwise on the basis of FIG. 5.
FIG. 7 is a schematic diagram of the state of the launching unit and the receiving range of the receiving unit after the counter rotating bodies in the embodiment continue rotating anticlockwise on the basis of FIG. 6.
FIG. 8 is a schematic diagram of the state of the launching unit and the receiving range of the receiving unit after the counter rotating bodies in the embodiment continue rotating anticlockwise on the basis of FIG. 7.
FIG. 9 is a schematic diagram of the state of the launching unit and the receiving range of the receiving unit after the counter rotating bodies in the embodiment continue rotating anticlockwise on the basis of FIG. 8.
FIG. 10 is a schematic diagram of the state of the launching unit and the receiving range of the receiving unit after the counter rotating bodies in the embodiment continue rotating anticlockwise on the basis of FIG. 9.
FIG. 11 is a schematic diagram of the state of the launching unit and the receiving range of the receiving unit after the counter rotating bodies in the embodiment continue rotating anticlockwise on the basis of FIG. 10.
FIG. 12 is a schematic diagram of the state of the launching unit and the receiving range of the receiving unit after the counter rotating bodies in the embodiment continue rotating anticlockwise on the basis of FIG. 11.
FIG. 13 is a schematic diagram of the state of the launching unit and the receiving range of the receiving unit after the counter rotating bodies in the embodiment continue rotating anticlockwise on the basis of FIG. 12.
FIG. 14 is a schematic diagram of the state of the launching unit and the receiving range of the receiving unit after the counter rotating bodies in the embodiment continue rotating anticlockwise on the basis of FIG. 13.
FIG. 15 is a schematic diagram of the state of the launching unit and the receiving range of the receiving unit after the counter rotating bodies in the embodiment continue rotating anticlockwise on the basis of FIG. 14.
FIG. 16 is a schematic diagram of the state of the launching unit and the receiving range of the receiving unit after the counter rotating bodies in the embodiment continue rotating anticlockwise on the basis of FIG. 15.

### DESCRIPTION OF THE PREFERRED EMBODIMENTS

If the receiving unit is taken to be in a relatively still state, the launching unit then has counter rotation motion, and the path of motion of the launching unit is a closed circle.

The least number of receiving units and launching units of a data transmission device used between counter rotating bodies meets the following relational expression:
Product of the number of receiving units and the number of launching units is N = 360°/(α+β); wherein, α is the central angle of the circular segment covered by the effective launching range of the launching unit on the corresponding rotation circle, and β is the central angle of the circular segment covered by the effective receiving range of the receiving unit on the corresponding rotation circle. If N is a decimal, the minimum positive integer bigger than N shall be taken as N. For example, if the original calculation result of N is 14.4, N shall take the integer 15, because the number of the receiving units and launching units is a positive integer. The central angular interval of the receiving units is 360°divided by the number of receiving units. The central angular interval of launching units is 360°divided by the number of receiving units and then deducted by the central angle of the circular segment covered by the receiving units on the rotation circle. In order to simplify the calculation, set α or β as 0. Device of the invention and design method of the device will be specified in the following parts supposing the central angle α of the circular segment covered by the effective launching range of the launching units on the rotation circle is 0.
The under-mentioned method is the method making the design of the data transmission device between counter rotating bodies more effective, supposing the launching units have counter rotation motion, and the receiving units are relatively still. If the counter rotating bodies are hollow or the center of rotation is occupied, first of all, determine the diameter of the hollow part or the maximum diameter of the occupied center of rotation. If the counter rotating bodies are not hollow or the center of rotation is not occupied, first of all, determine the diameter of rotation circle formed by the path of motion of the launching units. In whichever cases, the rotation diameter will be used in the following parts to replace the above-mentioned diameter of the hollow part or the occupied maximum diameter or the diameter of the circle formed by the path of motion of the launching units. After deciding the rotation diameter, calculate the central angle of the circular segment covered by the receiving range on the rotation circle within the rotation diameter according to the receiving range of the receiving unit. Then, the product of the number of receiving units and the number of launching units can be determined according to the central angle. The product N is 360° divided by the central angle. Take appropriate natural numbers to represent the number of receiving units and launching units, and make their product be N. Then decide the installation site of the receiving units. The receiving units shall be evenly distributed on the rotation circle, namely the circular segments covered by the receiving units on the rotation circle are distributed on the rotation circle evenly. The central angular interval of the receiving units is 360° divided by the number of receiving units. The central angular interval of launching units is 360° divided by the number of receiving units and then deducted by the central angle of the circular segment covered by the receiving units on the rotation circle.

The following parts will explain the above mentioned method with several examples. If the central angle of the receiving range is 360°, namely, the effective receiving range of the receiving unit covers the total circle, according to the above method, the product of the number of receiving unit and the number of launching unit is 1, then, both the number of the receiving unit and the number of the launching units are 1. The receiving unit shall be set evenly on the rotation circle, namely, it shall be mounted along the complete rotation circle. The central angular interval of launching units is 360°divided by the number of receiving units and then deducted by the central angle of the circular segment covered by the receiving units on the rotation circle, namely 360/1-360 = 0. This means there is only 1 launching unit, which coincides with the calculation result. The launching unit can be mounted optionally.

If the central angle of the receiving range is 180°, namely, the effective receiving range of the receiving unit covers half of the circle, then the product of the number of receiving units and the number of launching units is 2. Two cases are available; the number of launching units is 1 and the number of receiving units is 2, or the number of launching units is 2 and the number of receiving units is 1. When the number of launching units is 1 and the number of receiving units is 2, the receiving units are distributed on the rotation circle evenly; the central angular interval of the receiving units is 360 divided by the number of receiving units, namely 360/2 = 180; that's to say, each receiving unit covers half of the circle. The central angular interval of the launching unit is 360 divided by the number of the receiving unit and then deducted by the central angle of the circular segment covered by the receiving unit on the rotation circle, namely, 360/2-180 = 0; this means there is only one launching unit, which coincides with the calculation result; the launching unit can be mounted optionally. When the number of launching units is 2 and the number of receiving units is 1, the receiving unit is distributed on the rotation circle evenly; the number of receiving units is 1, so it can be mounted optionally. The central angular interval of launching units is 360 divided by the number of receiving units and then deducted by the central angle of the circular segment covered by the receiving units on the rotation circle, namely 360/1-180 = 180. This means there are two launching units, which coincides with the calculation result. The launching units can be mounted with a central angular interval of 180°.

The above case is a specific embodiment set for simplifying calculation, and α is set as 0 directly. Or it's thus designed because the effective range of the launching unit is smaller than the receiving range. For example, when the effective launching range is one-tenth smaller than the effective receiving range, compared with the receiving range of the receiving unit, the launching range can be omitted, and it can be considered as a dot. Then it can be designed according to the above embodiment. However, if the effective range of the launching unit is very big, the product of the number of receiving units and the number of launching units can be 360 divided by the sum of the central angle of the circular segment covered by the effective range of the receiving unit on the rotation circle and the central angle of the circular segment covered by the receiving unit on the rotation diameter; position of the receiving units and launching units can also be determined according to the above method. In a similar way, the calculation can also be simplified by setting β as 0 directly, or if the receiving range is small compared with the launching range, for example, when the receiving range is one-tenth smaller than the launching range, the receiving range can also be neglected; thus the receiving range can be considered as a dot, and P can be set as 0.

The above-mentioned number of receiving units and launching units is the minimum number set for the purpose of finishing the invention, and it can be increased on this basis. The working mode of the receiving units and launching units can also be reversed, namely, the launching units can have a bigger working range, and the working range of the receiving unit is small and can be considered as a dot.

The above-mentioned launching units and receiving units can adopt different technologies suitable for data transmission, such as light, laser, radio and ultrasonic technologies.

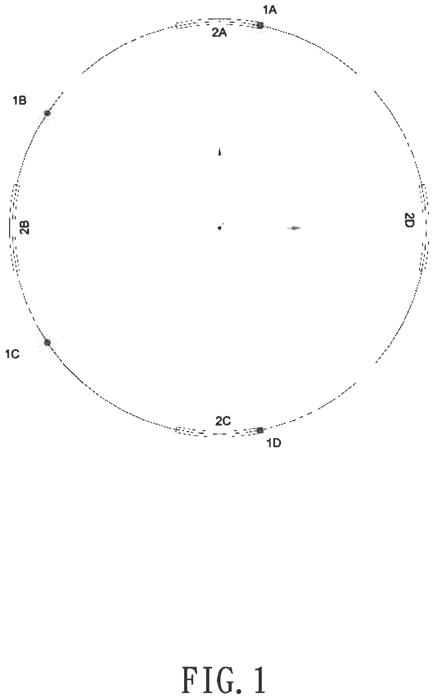

Figures 1∼16 show a preferred embodiment of the invention used for CT system. In the FIG., the broken circle represents the free inner diameter of CT system. The launching unit is mounted on the rotating body and rotates along the broken circle. The rotating body is omitted in the FIG. The receiving unit is mounted on a fixed body, and the fixed body is also omitted in the FIG. The central angle of the circular arc formed by the effective receiving range of the receiving unit on the broken circle that represents the free inner diameter of CT system is 22.5°. It's represented by the circular segment on the broken circle in figures 1∼16. The effective working range of launching units is represented by the solid circle in figures 1∼16.

According to the calculation method in the Summary of the Invention, the product of the number of launching units and the number of receiving units is 360/22.5 = 16. Here, the number of launching units is preferentially considered to be the same as the number of receiving units. Both the number of launching units and the number of receiving units are 4; wherein, the launching units 1A, 1B, 1C, and 1D emit data, and the receiving units 2A, 2B, 2C, and 2D receive data within the effective receiving range. The launching units 1A, 1B, 1C and 1D and the receiving units 2A, 2B, 2C and 2D are arranged along the circumferential direction; wherein, the receiving unit are distributed evenly along the circumferential direction, then the central angular interval of the receiving units is 90°, and the central angular interval of the launching units is 360/4-22.5 = 67.5°. On the rotating body, there is also a data source; the data source needs to be transmitted from the rotating body to the fixed body. In CT system, the data are scanning data acquired by the data acquisition system. The data are sent to four launching units through the one-to-four branching unit. If the transmission carrier of the data sent from the data source to the launching unit is light, the one-to-four branching unit is then an optical branching unit. If the transmission carrier of the data is current or voltage, the one-to-four branching unit is then a circuit branching unit. On the fixed body, there is a four-in-one combiner that can combine the data received by four receiving units into one signal and send it to the processing equipment; the four-in-one combiner can also be an optical or circuit combiner determined according to the carrier of data transmission.

Figures 1∼16 show the different states of the launching units 1A, 1B, 1C, and 1D against the receiving units 2A, 2B, 2C, and 2D when the rotating body rotates anticlockwise. Of course, the rotating body can also rotate clockwise, and the state of launching units 1A, 1B, 1C and 1D against the receiving units 2A, 2B, 2C and 2D is similar to that during anti-clockwise rotation.

FIG. 1 shows the state of the launching units 1A, 1B, 1C, and 1D against the receiving units 2A, 2B, 2C, and 2D at the initial state. The launching unit 1A just enters the effective receiving range of the receiving unit 2A, and the receiving unit 2A begins to receive the data signal sent by the launching unit 1A.

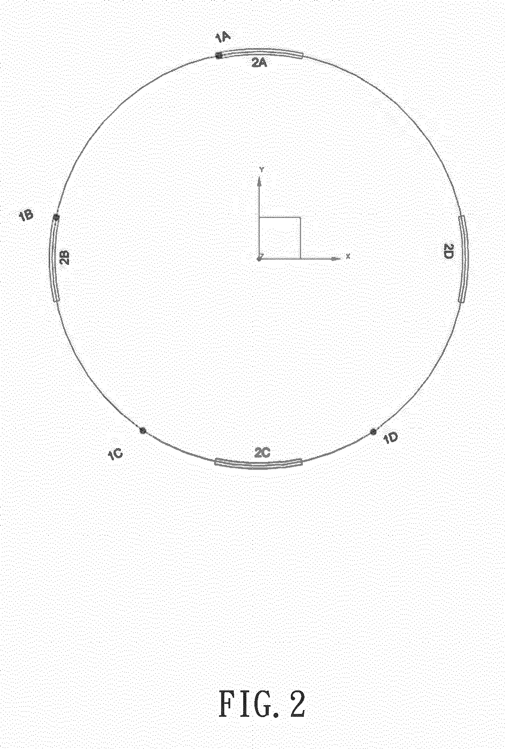

The rotating body rotates anticlockwise; when it rotates for 22.5°, the state is shown in FIG. 2. The launching unit 1A is about to go out of the effective receiving range of the receiving unit 2A, and at the same time, the launching unit 1B has already entered the effective receiving range of the receiving unit 2B, and the receiving unit 2B begins to receive data.

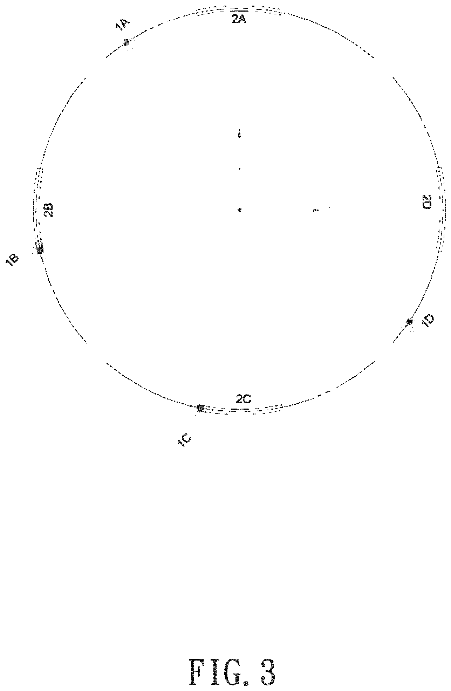

When the rotating body rotates anticlockwise for another 22.5°, the state is shown in FIG. 3. The launching unit 1B is about to go out of the effective receiving range of the receiving unit 2B, and at the same time, the launching unit 1C has already entered the effective receiving range of the receiving unit 2C, and the receiving unit 2C begins to receive data.

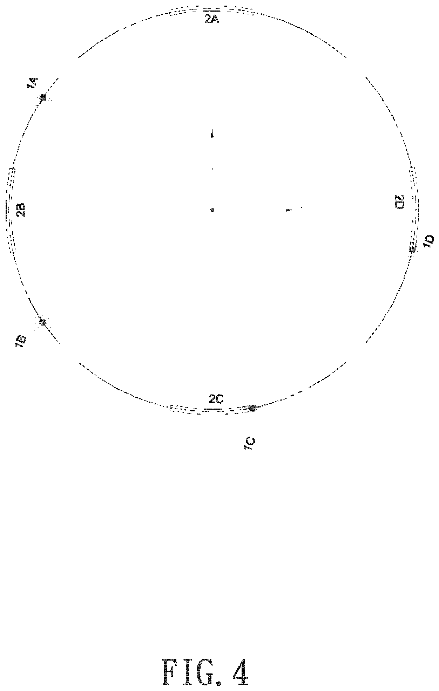

When the rotating body rotates anticlockwise for another 22.5°, the state is shown in FIG. 4. The launching unit 1C is about to go out of the effective receiving range of the receiving unit 2C, and at the same time, the launching unit 1D has already entered the effective receiving range of the receiving unit 2D, and the receiving unit 2D begins to receive data.

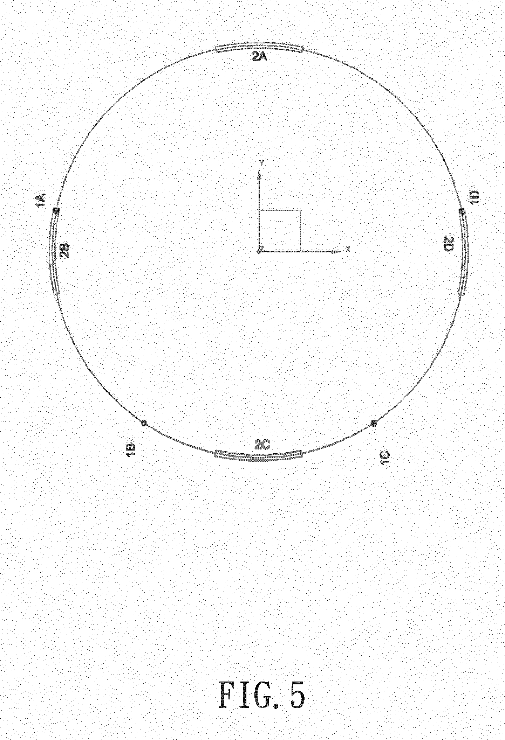

When the rotating body rotates anticlockwise for another 22.5°, the state is shown in FIG. 5. The launching unit 1D is about to go out of the effective receiving range of the receiving unit 2D, and at the same time, the launching unit 1A has already entered the effective receiving range of the receiving unit 2B, and the receiving unit 2B begins to receive data.

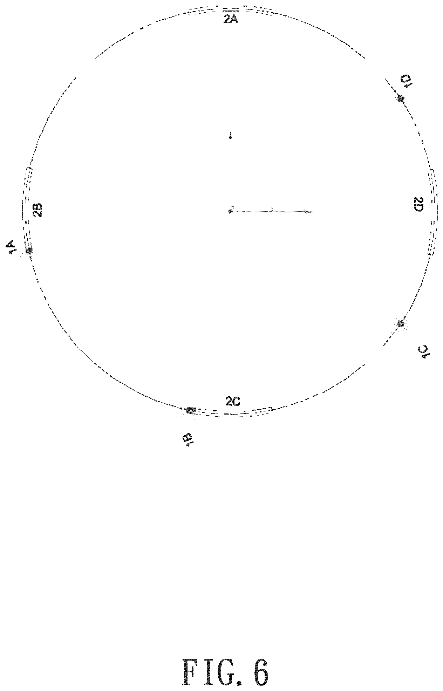

When the rotating body rotates anticlockwise for another 22.6°, the state is shown in FIG. 6. The launching unit 1A is about to go out of the effective receiving range of the receiving unit 2B, and at the same time, the launching unit 1B has already entered the effective receiving range of the receiving unit 2C, and the receiving unit 2C begins to receive data.

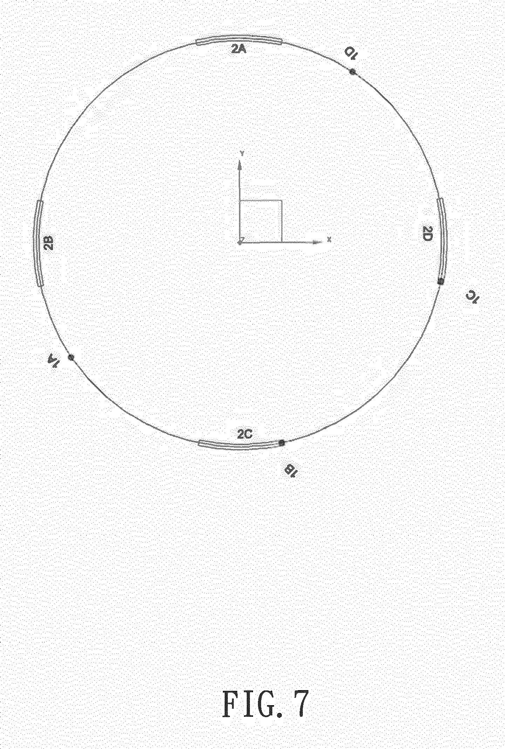

When the rotating body rotates anticlockwise for another 22.7°, the state is shown in FIG. 7. The launching unit 1B is about to go out of the effective receiving range of the receiving unit 2C, and at the same time, the launching unit 1C has already entered the effective receiving range of the receiving unit 2D, and the receiving unit 2D begins to receive data.

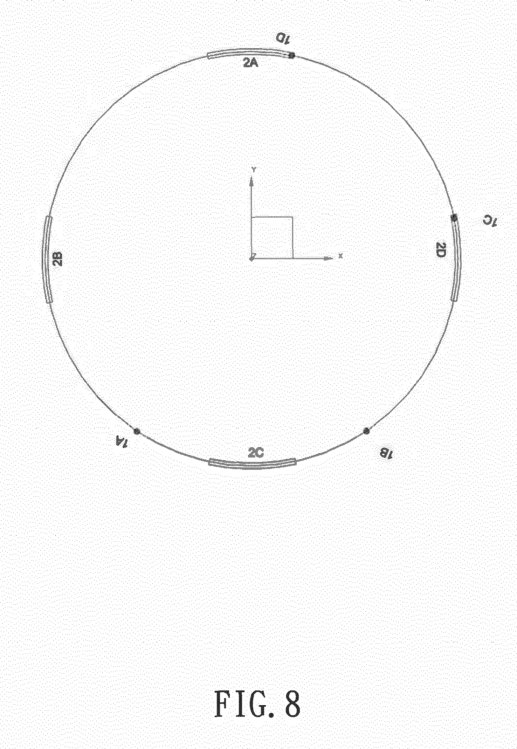

When the rotating body rotates anticlockwise for another 22.8°, the state is shown in FIG. 8. The launching unit 1C is about to go out of the effective receiving range of the receiving unit 2D, and at the same time, the launching unit 1D has already entered the effective receiving range of the receiving unit 2A, and the receiving unit 2A begins to receive data.

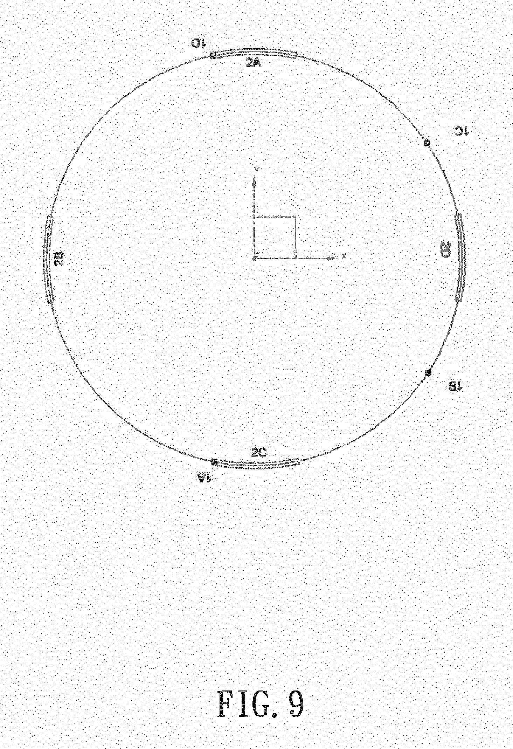

When the rotating body rotates anticlockwise for another 22.9°, the state is shown in FIG. 9. The launching unit 1D is about to go out of the effective receiving range of the receiving unit 2A, and at the same time, the launching unit 1A has already entered the effective receiving range of the receiving unit 2C, and the receiving unit 2C begins to receive data.

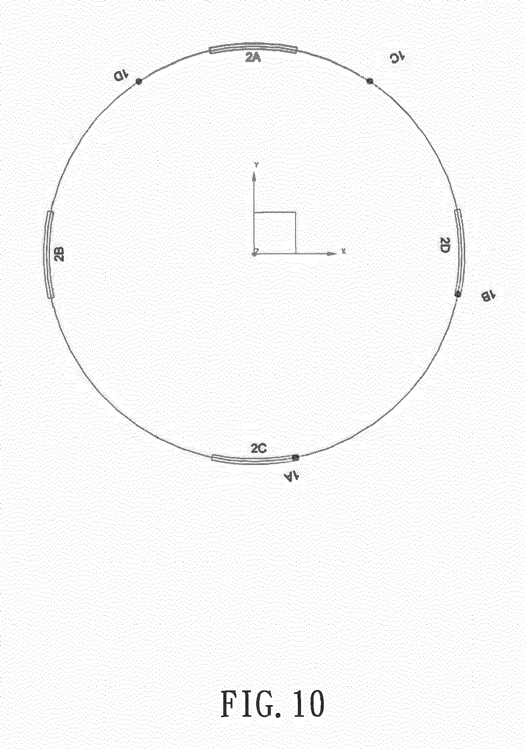

When the rotating body rotates anticlockwise for another 22.10°, the state is shown in FIG. 10. The launching unit 1A is about to go out of the effective receiving range of the receiving unit 2C, and at the same time, the launching unit 1B has already entered the effective receiving range of the receiving unit 2D, and the receiving unit 2D begins to receive data.

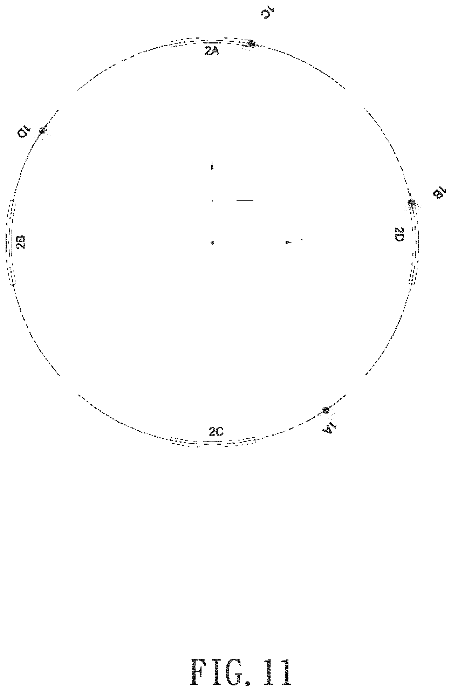

When the rotating body rotates anticlockwise for another 22.11°, the state is shown in FIG. 11. The launching unit 1B is about to go out of the effective receiving range of the receiving unit 2D, and at the same time, the launching unit 1C has already entered the effective receiving range of the receiving unit 2A, and the receiving unit 2A begins to receive data.

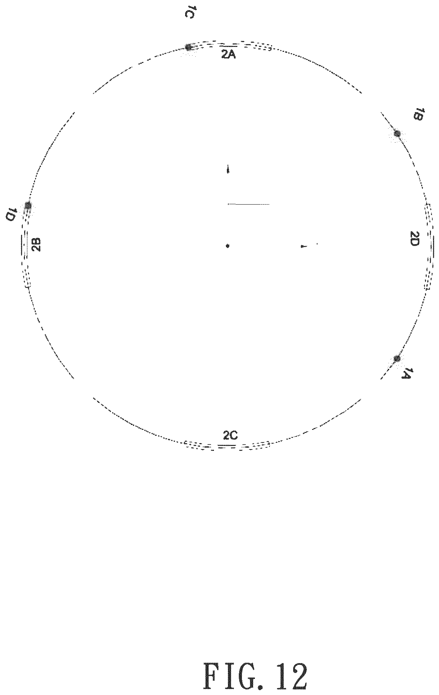

When the rotating body rotates anticlockwise for another 22.12°, the state is shown in FIG. 12. The launching unit 1C is about to go out of the effective receiving range of the receiving unit 2A, and at the same time, the launching unit 1D has already entered the effective receiving range of the receiving unit 2B, and the receiving unit 2B begins to receive data.

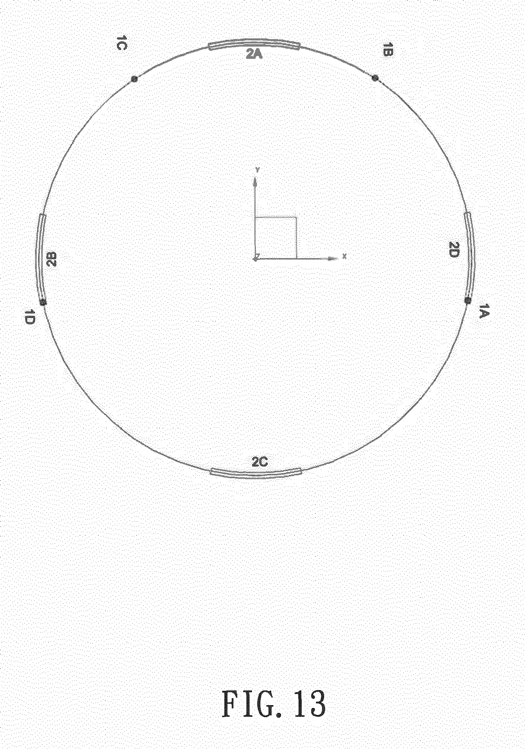

When the rotating body rotates anticlockwise for another 22.13°, the state is shown in FIG. 13. The launching unit 1D is about to go out of the effective receiving range of the receiving unit 2B, and at the same time, the launching unit 1A has already entered the effective receiving range of the receiving unit 2D, and the receiving unit 2D begins to receive data.

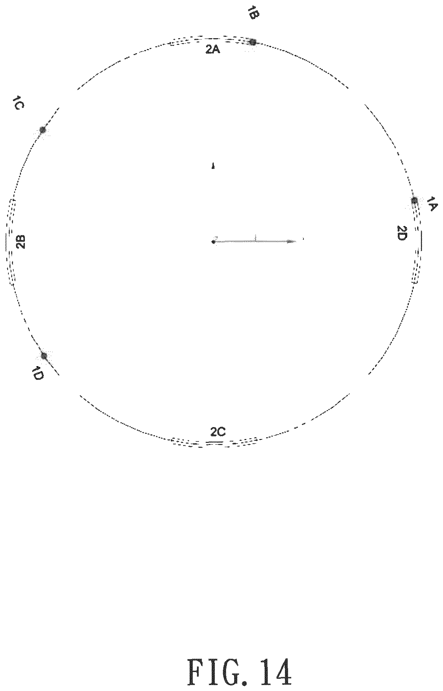

When the rotating body rotates anticlockwise for another 22.14°, the state is shown in FIG. 14. The launching unit 1A is about to go out of the effective receiving range of the receiving unit 2D, and at the same time, the launching unit 1B has already entered the effective receiving range of the receiving unit 2A, and the receiving unit 2A begins to receive data.

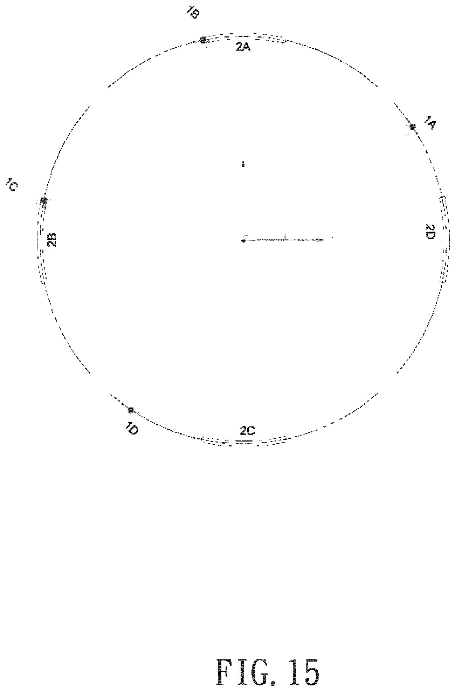

When the rotating body rotates anticlockwise for another 22.15°, the state is shown in FIG. 15. The launching unit 1B is about to go out of the effective receiving range of the receiving unit 2A, and at the same time, the launching unit 1C has already entered the effective receiving range of the receiving unit 2B, and the receiving unit 2B begins to receive data.

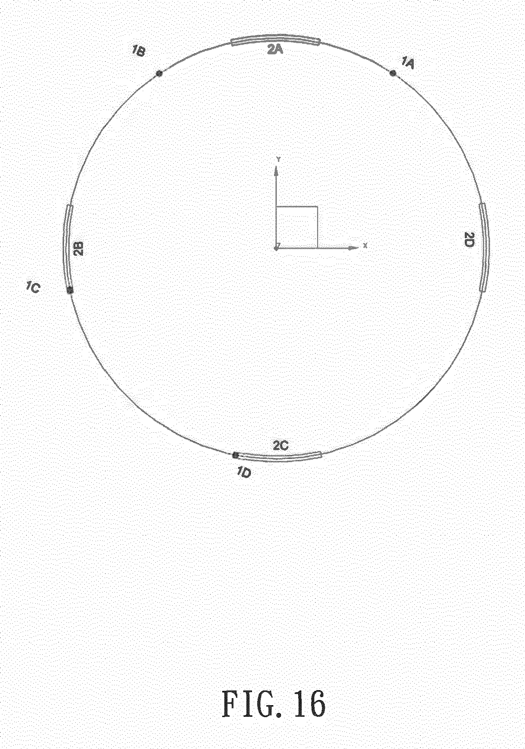

When the rotating body rotates anticlockwise for another 22.16°, the state is shown in FIG. 16. The launching unit 1C is about to go out of the effective receiving range of the receiving unit 2B, and at the same time, the launching unit 1D has already entered the effective receiving range of the receiving unit 2C, and the receiving unit 2C begins to receive data.

When the rotating body rotates anticlockwise for another 22.5°, the state is shown in FIG. 1. Then, the next circle begins. Through the above said alternate transmission process, the data signal given out by the launching units can be sent seamlessly to each receiving unit alternately.

In the embodiment, light is preferred as the carrier to transmit data between the rotating body and fixed body; of course, radio or ultrasonic sound can also be used as the data carrier. The launching unit can give out the light beam that represents the data. The size of light beam is shown in the solid circle in figures 1∼16. The part that gives out the light beam in the launching unit can be a fiber collimating mirror that can give out quasi-parallel light beams; of course, other parts that can give out quasi-parallel beams can also be used. If the part that gives out the light beam in the launching unit is a fiber collimating mirror, the one-to-four branching unit from the data source to the launching unit is then a commonly used one-to-four equational optical branching unit. The receiving unit can be focusing lens or set of lens, or the band of lens on the lens or set of lens that can cover the emitted light beam. See the circular arc on the broken circle in figures 1∼16. Within the effective receiving range, it can receive all light beams and send them to the fiber on the focal length of the focusing lens or set of lens, and then the light beams will be combined to one fiber through a four-in-one optical combiner. During the alternation of transmission, namely the state shown in each attached figure, two light signals enter the combiner at the same time. Aliasing of signals can be avoided as long as the length of the light path from the launching unit to the receiving unit is well controlled, and the length is consistent or has only a certain small allowable error.

The launching unit can emit data all the time, and can also be controlled to emit data when it enters the effective receiving range of the receiving unit according to the rotation position; so does the receiving unit. It can receive data all the time, and can also be controlled to receive data when the launching unit enters the effective receiving range of the receiving unit according to the rotation position.

The path of motion of the launching unit against the receiving unit need not be a circle. As long as the path of motion is a closed curve, the number and positional relationship of the launching units and receiving units can then be decided using the method in the invention.

The above parts are a description of the preferred embodiments of the invention, but the invention is not only restricted to the above embodiments. Technologists in this area can obviously think of different cases of variation or modification within the scope of the Patent Claims; of course, such cases of variation or modification also belong to the technical field of the invention.

## Claims

1. A data transmission system used between counter rotating bodies that adopts the data transmission method based on the alternation between several launching units and several receiving units, is **characterized in that**: it consists of a data acquisition unit, one-to-N1 branching unit, N1 launching units, N2 all-in-one combiner, N2 receiving units, and data processing equipment; N1 launching unit and one-to-N1 branching unit are set on one counter rotating body; N2 all-in-one combiner and N2 receiving units are set on the other counter rotating body; The number of the N1 and N2 is determined according to the effective launching range as the working range of the launching unit and the effective receiving range as the working range of the receiving unit;
One of the launching units and one of the receiving units are evenly arranged on the closed movement path of the rotating body, and the maximum interval between two adjacent units of the other one is the closed movement path divided by its number and then deducted by the working range of the former one;
When the data transmission system between the counter rotating bodies works, the data acquired by the data acquisition unit are sent to N1 launching units by one-to-N1 branching unit; One pair or several pairs of the N1 launching units and N2 receiving units, of which the working range coincides with each other, have data transmission between them; The receiving unit that receives data sends the data to the data processing equipment through the N2 all-in-one combiner.

2. The data transmission system used between counter rotating bodies according to claim 1 is **characterized in that**: All the paths of motion of the counter rotating body are closed circle; when the effective launching range of the launching unit is α, and the effective receiving range of the receiving unit is β, the product of the number of the launching units and the receiving units N1 and N2 is greater than or equal to the least integer of 360°/(α +β); both N1 and N2 are positive integer;
The respective interval of the launching unit and the receiving unit is:
If the receiving units are evenly distributed on the closed circle of path, the radian of the central angle of the adjacent intervals is 360°/ N2;
The radian of central angle of the maximum interval between the adjacent launching units is 360°/ N1-β.

3. The data transmission system used between counter rotating bodies according to claim 2 is **characterized in that**: When the effective launching range is smaller than one-tenth of the effective receiving range, set α as 0; when the effective receiving range is smaller than one-tenth of the effective launching range, set β as 0.

4. The data transmission system used between counter rotating bodies according to any one of claims 1-3 is **characterized in that**: The one-to-N1 branching unit can choose the optical branching device or circuit branching device according to the transmission carrier of the data sent by the data acquisition unit to the launching unit; the N2 all-in-one combiner can also choose the optical combiner or circuit combiner according to the form of data transmission carrier.

5. The design method of a data transmission system used between counter rotating bodies is the design method of the data transmission system used between the counter rotating bodies of any one of claims 1∼4; the design method is **characterized in that**:
Step 1, Determine the rotation diameter of the counter rotating bodies;
Step 2, Calculate the central angle α of the circular segment covered by the effective launching range of the launching unit on the corresponding rotation circle within the rotation diameter, and calculate the central angle β of the circular segment covered by the effective receiving range on the corresponding rotation circle within the rotation diameter according to the effective launching range of the launching unit and the effective receiving range of the receiving unit;
Step 3, Work out the product of the number of the receiving units and the launching units N≥360°/(α+β); N is positive integer;
Step 4, Determine the number of the receiving unit and the launching unit according to the product N, and the number of the receiving unit and launching unit is a positive integer;
Step 5, Confirm that one assembly, the launching units or the receiving units, is arranged evenly along the rotation circle; Then the central angle of the maximum interval between the two adjacent units of the other assembly on the rotation circle is 360° divided by the number of units and then deducted by the effective working range of the former assembly;
Step 6, The receiving units and the launching units shall be arranged according to the above data and connected with other parts of the system.

6. Design method of the data transmission system used between counter rotating bodies according to claim 5 is **characterized in that**, suppose α or β is 0.

7. In the design method of the data transmission system used between counter rotating bodies according to claim 5, when the launching range is one-tenth smaller than the receiving range, α is 0, or when the receiving range is one-tenth smaller than the launching range, β is 0.

8. Design method of the data transmission system used between counter rotating bodies according to claims 5∼7 is **characterized in that**: Suppose the number of the receiving unit or the number of the launching unit is 1, then the unit can be arbitrarily set, and the other units shall be evenly set on the rotation circle.

9. Design method of the data transmission system used between counter rotating bodies according to claims 5∼7 is **characterized in that**: Decide the number of the receiving units and the launching units, so that the receiving units and the launching units can be evenly set on their respective rotation circle.
